# EUROPÄISCHE PATENTSCHRIFT

(11) **EP 0 467 846 B1**
(45) Veröffentlichungstag und Bekanntmachung des Hinweises auf die Patenterteilung: **31.08.1994**
(21) Anmeldenummer: 91810557.8
(22) Anmeldetag: 11.07.1991
(51) Int. Cl.: C09K 9/02, C07D 487/04

(54) **Neue elektrochrome Stoffzusammensetzungen auf der Basis von Diketopyrrolopyrrolen**
New electrochromic compositions based on diketopyrrolopyrroles
Nouvelles compositions électrochromes à bases de diketopyrrolopyrroles

(30) Priorität: 20.07.1990 CH 2418/90
(43) Veröffentlichungstag der Anmeldung: 22.01.1992
(73) Patentinhaber: CIBA-GEIGY AG, 4002 Basel (CH)
(72) Erfinder: Mizuguchi, Jin, Dr., CH-1700 Fribourg (CH); Rochat, Alain Claude, Dr., CH-1700 Fribourg (CH)

(56) Entgegenhaltungen:
- EP-A- 0 061 426
- WO-A-90/01480
- DE-A- 3 713 459

## Beschreibung

Die vorliegende Erfindung betrifft neue Stoffzusammensetzungen enthaltend bestimmte Diketopyrrolopyrrole in Kombination mit einem Hilfsredoxsystem und mindestens einem Leitsalz, die Verwendung dieser Stoffzusammensetzungen als elektrochrome Materialien in Anzeige-Systemen (display systems), sowie Verfahren zu deren Herstellung.

Optische Anzeige-Systeme zur Erzeugung z.B. von Buchstaben, Ziffern oder Bildern in Anzeige-Systemen sind bekannt, wobei zu deren Erzeugung z.B. Flüssigkristall-, Elektrolumineszenz- und Plasma-Display oder elektrochrome Materialien verwendet werden.

Mit elektrochromen Materialien können kontinuierliche und reversible Veränderungen der Absorption und Reflexion der eingesetzten optisch wirksamen Verbindungen erzeugt werden. Dabei wird mit Hilfe einer elektrochemischen Redox-Reaktion eine Farbänderung auf bzw. dicht an der Anzeige-Elektrode während einer bestimmten Zeit erzeugt und je nach Anwendungsgebieten in gewünschten Zeitabständen kontinuierlich wiederholt. Verschiedene elektrochrome Materialien wurden bereits vorgeschlagen: anorganische Verbindungen, wie z.B. WO₃, V₂O₅, Iridiumoxide, Nickeloxide oder Fe₄[Fe(CN)₆]₃ (sogenantes Prussian blue), ferner organische Materialien, wie z.B. Bipyridiniumsalze (die sogenannten Viologene), Metallphthalocyanine der seltenen Erden, Tris-(bipyridyl)ruthenium-III-Komplexe oder Thieno-(3,2-b)-thiophene, sowie polymere Materialien, wie Polythiophene oder Polypyrrole. Siehe in diesem Zusammenhang: Glastechnische Berichte 62/1989, Nr. 2, 38-45; Displays, Oktober 1983, 221-225; Proceedings of the SID, Vol. 25/4 (1984), 331-334; Japanese Journal of Applied Physics 26, 1352-1355 und 1356-1360;Angew. Chem., Int. Ed. Engl. 27 (1988), 560-561; Japanese Journal of Applied Physics 24, 1985, L178-L180.

Mit den dort vorgeschlagenen Systemen können einfarbige (z.B. eine spezifische Anzeigefarbe besonders bei anorganischen Materialien) oder mehrfarbige (z.B. vor allem bei organischen Materialien) Anzeigen erzeugt werden; sie erfüllen aber die verschiedenen hohen Anforderungen der Praxis nicht immer, insbesondere können die verschiedensten Wünsche der Kundschaft bezüglich der drei Primär-Grundfarben, z.B. für Fernsehapparate oder Anzeige-Systeme, nicht immer realisiert werden. Es wurde nun gefunden, dass man durch Verwendung bestimmter Diketopyrrolopyrrole in Kombination mit einem Hilfsredoxsystem und mindestens einem Leitsalz mehrfarbige, elektrochrome Anzeigen mit hohem Kontrast und langer Betriebslebensdauer bei guter Lesbarkeit erhalten kann.

Der vorliegende Erfindungsgegenstand betrifft demnach Stoffzusammensetzungen enthaltend
(a) mindestens ein 1,4-Diketopyrrolo-[3,4-c]-pyrrol der Formeln I, II, IIa, III oder IV 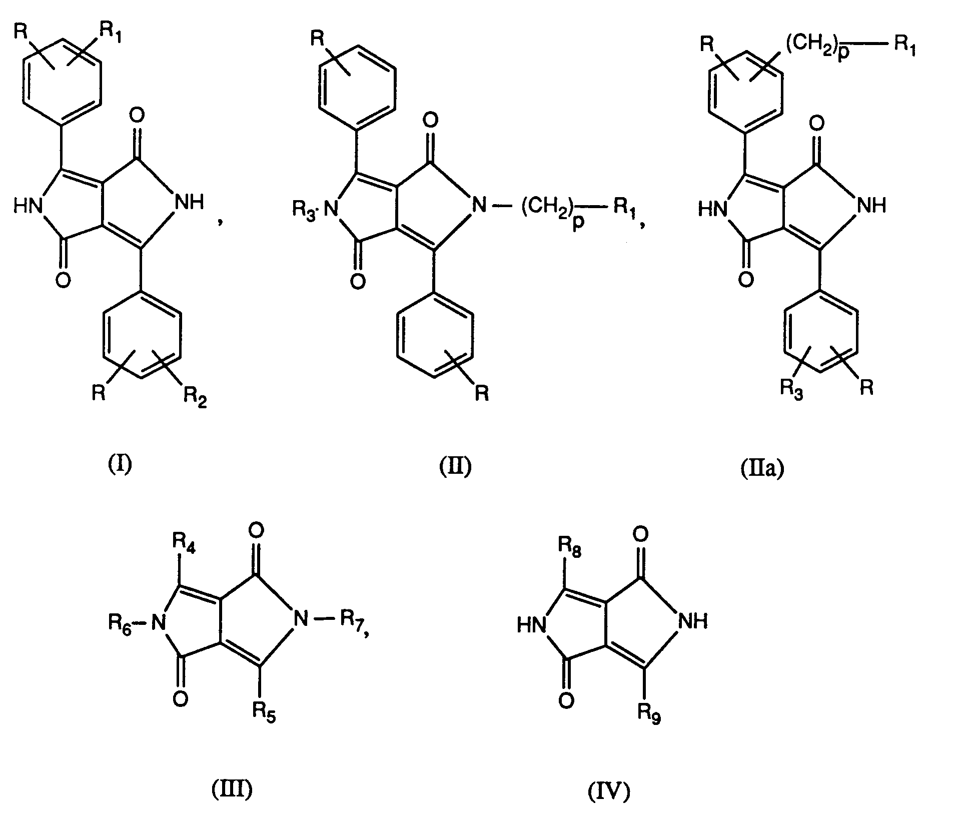 und
(b) ein Hilfsredoxsystem aus der Ferrocyanid-, Ferrocen- oder Ammonium-Eisen(II)sulfat-Reihe in Kombination mit mindestens einem Leitsalz (c), wobei in den Formeln I, II und IIa
   die beiden Gruppen R unabhängig voneinander -H, Halogen, C₁-C₄-Alkyl, C₁-C₄-Alkoxy, C₁-C₄-Mercaptoalkyl, -CN, -CF₃ oder Phenyl, R₂ -H oder R₁, und R₃ -H oder eine Gruppe der Formel -(CH₂)ₚ-R₁ bedeuten, p für eine ganze Zahl von 1 bis 6 und R₁ für eine Gruppe der Formel -CO₂L, -SO₃L, -PO₃L oder -N⁺(R₁₀)(R₁₁)(R₁₂)X⁻ stehen, worin X ein Halogenion, (SO₄)²⁻, (SO₃OCH₃)⁻ oder (SO₃OC₂H₅)⁻ und L -H, eine Gruppe der Formel 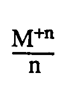 oder ⁺NH(R₁₀)(R₁₁)(R₁₂) darstellen, wobei M ein ein-, zwei- oder dreiwertiges Metallkation, n die Zahl 1, 2 oder 3, und R₁₀, R₁₁ und R₁₂ unabhängig voneinander -H, C₁-C₁₈-Alkyl, C₇-C₁₂-Phenylalkyl, C₅-C₆-Cycloalkyl oder unsubstituiertes oder durch Halogen, C₁-C₄-Alkyl oder C₁-C₄-Alkoxy substituiertes Phenyl oder Naphthyl bedeuten, oder R₁₀ und R₁₁ zusammen mit dem N-Atom einen 5-6-gliedrigen heterocyclischen Rest bilden, oder R₁₀, R₁₁ und R₁₂ zusammen mit dem N-Atom einen 5-6-gliedrigen aromatischen heterocyclischen Rest darstellen, in der Formel III
   R₄ und R₅ unabhängig voneinander unsubstituiertes oder durch Halogen, C₁-C₄-Alkyl oder C₁-C₄-Alkoxy substituiertes Naphthyl, Phenyl oder Pyridyl bedeuten, das wiederum durch ein oder zwei Halogenatome, eine oder zwei C₁-C₄-Alkyl- oder C₁-C₄-Alkoxygruppen, ferner durch C₁-C₄-Alkylmercapto, -CN, CF₃, -CCl₃, -CONH₂, C₂-C₅-Alkoxycarbonyl oder unsubstituiertes oder durch Halogen, -CH₃ oder -OCH₃ substituiertes Phenyl, Phenoxy, Thiophenoxy und N-Phenylcarbamoyl substituiert sein kann, und R₆ und R₇ unabhängig voneinander C₁-C₁₂-Alkyl, C₁-C₁₂-Alkoxy, C₁-C₁₂-Alkylmercapto, C₁-C₁₂-Alkyl-C₂-C₅-alkoxycarbonyl, C₁-C₁₂-Alkyl-C₁-C₄-N-alkylcarbamoyl oder unsubstituiertes oder durch Halogen, C₁-C₄-Alkyl, C₁-C₄-Alkoxy, C₁-C₄-Alkylmercapto, -CN oder -CF₃ substituiertes Phenyl, Benzyl oder Benzoyl bedeuten, und in der Formel IV
   R₈ und R₉ unabhängig voneinander C₁-C₈-Alkyl, C₃-C₆-Cycloalkyl, C₇-C₁₂-Phenylalkyl, das im Phenylrest durch Halogen, C₁-C₄-Alkyl, C₁-C₄-Alkoxy, C₁-C₄-Alkylmercapto, -CN, -CF₃, -CH₃, -CONH₂ oder Phenyl substituiert sein kann, ferner R₈ und R₉ unsubstituiertes oder durch Halogen, C₁-C₄-Alkyl oder C₁-C₄-Alkoxy substituiertes Naphthyl oder unsubstituiertes oder durch Halogen, C₁-C₄-Alkyl, C₁-C₄-Alkoxy, C₁-C₄-Alkylmercapto, -CN, -CF₃, -CCl₃, -CONH₂ oder Phenyl substituiertes Phenyl, oder Pyridyl sind.

Die verschiedenen in den obigen Resten vorkommenden Alkylgruppen können verzweigt oder unverzweigt sein. C₁-C₄-Alkyl bedeutet z.B. Methyl, Ethyl, n-Propyl, Isopropyl, n-Butyl, sec.-Butyl und tert.-Butyl, insbesondere aber Methyl. C₁-C₈-Alkyl kann z.B. die gleiche für C₁-C₄-Alkyl oben angegebene Bedeutung haben und ausserdem z.B. n-Propyl, Isopropyl, tert.-Pentyl, n-Hexyl oder 1,1,3,3-Tetramethylbutyl sein. Bei C₁-C₁₂-Alkyl und C₁-C₁₈-Alkyl handelt es sich z.B. um die gleichen oben angegebenen Definitionen, ferner n-Heptyl, n-Octyl, Nonyl, Decyl, Undecyl, Dodecyl bzw. Tridecyl, Tetradecyl, Pentadecyl, Hexadecyl, Heptadecyl und Octadecyl.

Beispiele für C₁-C₄-Alkoxy und C₁-C₁₂-Alkoxy sind Methoxy, Ethoxy, n-Propoxy, Isopropoxy, n-Butoxy, sec.-Butoxy, tert.-Butoxy, n-Pentoxy, Isopentoxy, n-Hexyloxy, Octyloxy, Decyloxy und Dodecyloxy, insbesondere aber Methoxy.

Beispiele für C₁-C₄-Alkylmercapto und C₁-C₁₂-Alkylmercapto sind Methyl-, Ethyl-, n-Propyl-, Isopropyl-, bzw. n-Hexyl-, Octyl- und Dodecylmercapto.

Halogen in den verschiedenen Definitionen bedeutet z.B. Fluor, Chlor und Brom, besonders aber Chlor.

X^{⊖} als Halogenion bedeutet z.B. Br⁻, F⁻, I⁻ und besonders Cl⁻.

C₃-C₆- und C₅-C₆-Cycloalkyl bedeuten z.B. Cyclopropyl, Cyclobutyl bzw. Cyclopentyl und Cyclohexyl.

C₇-C₁₂-Phenylalkyl ist z.B. Benzyl oder Phenylethyl.

C₂-C₅-Alkoxycarbonyl bedeutet z.B. Methoxy-, Ethoxy-, n-Propoxy- und Butoxycarbonyl.

R₄ und R₅, R₆ und R₇ sowie R₈ und R₉ sind bevorzugt gleiche Substituenten.

Bilden R₁₀ und R₁₁ zusammen mit dem N-Atom, an das sie gebunden werden, einen 5-6-gliedrigen heterocyclischen Rest, so handelt es sich dabei z.B. um einen Pyrrolidin-, Morpholin- oder Piperidinrest.

Bilden R₁₀, R₁₁ und R₁₂ zusammen mit dem N-Atom, an das sie gebunden werden, einen 5-6-gliedrigen aromatischen heterocyclischen Rest, so handelt es sich dabei z.B. um einen Pyrrol-, Pyridin-, Picolin-, Pyrazin-, Chinolin- oder Isochinolinrest.

Als Beispiele für ⁺NH(R₁₀)(R₁₁)(R₁₂) in der Definition von L seien genannt: ⁺NH₄, ⁺NH₃CH₃, ⁺NH₂(CH₃)₂, ⁺NH₃C₂H₅, ⁺NH₂(C₂H₅)₂, ⁺NH₃Isopropyl, ⁺NH₃Cyclohexyl, ⁺NH₂(CH₃)(C₆H₅), ⁺NH₃C₆H₅, ⁺NH₃(para Tolyl), ⁺NH₃Benzyl,

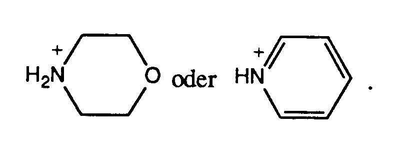

Beispiele für -N⁺(R₁₀)(R₁₁)(R₁₂)X⁻ sind -NH₃⁺Cl⁻, -NH₂(CH₃)⁺Cl⁻, -NH(CH₃)₂⁺Cl⁻, -NH₂(C₂H₅)⁺Cl⁻, -NH₂(C₆H₅)⁺Cl⁻ und -NH₂(CH₂C₆H₅)⁺Cl⁻.

Stellt L eine Gruppe der Formel 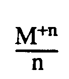
dar, so handelt es sich dabei um ein Alkali-, ein Erdalkali- oder ein Uebergangsmetallkation, insbesondere aber um Na⁺, K⁺, Mg²⁺, Ca²⁺, Sr²⁺, Ba²⁺, Mn²⁺, Zn²⁺, Cu²⁺, Ni²⁺, Cd²⁺, Co³⁺, Al³⁺ und Cr³⁺;
n ist besonders 1 oder 2, ganz bevorzugt aber 1;
M ist bevorzugt Na⁺;
p ist bevorzugt 1, 2 oder 3.

Beispiele für C₁-C₁₂-Alkyl-C₂-C₅-alkylcarbonyl bzw. -C₁-C₄-carbamoyl sind z.B. -CH₂COOCH₃, -CH₂COOC₂H₅, -CH₂COOC₄H₉, -CH₂CH₂COOC₂H₅, -CH₂CH₂CH₂COOC₂H₅ bzw. -CH₂CONH₂, -CH₂CH₂CONH₂ und -CH₂CH₂CH₂CONH₂.

Pyridyl bedeutet 2-, 3- und bevorzugt 4-Pyridyl.

Bevorzugte Stoffzusammensetzungen enthalten bevorzugt eine Verbindung der Formeln I, II, IIa, III, oder IV worin in den Formeln I, II und IIa die beiden Gruppen R unabhängig voneinander -H, -Cl, -CH₃ oder -OCH₃, R₂ -H oder R₁, und R₃ -H oder eine Gruppe der Formel -(CH₂)ₚ-R₁ bedeuten, p für eine ganze Zahl von 1 bis 6 und R₁ für eine Gruppe der Formeln -CO₂L₁ oder -SO₃L₁ stehen, wobei L₁ -H, Na oder K ist, in der Formel III R₄ und R₅ unabhängig voneinander unsubstituiertes oder durch ein oder zwei Chloratome, eine oder zwei C₁-C₄-Alkyl- oder C₁-C₄-Alkoxygruppen, Methylmercapto, -CN, Phenyl oder durch Phenoxy oder Thiophenoxy substituiertes Phenyl bedeuten, und in der Formel IV R₈ und R₉ 4-Pyridyl, unsubstituiertes oder durch -Cl, -Br, eine oder zwei CH₃- oder OCH₃-Gruppen substituiertes Phenyl bedeuten.

Von ganz besonderem Interesse sind Verbindungen der Formeln I oder IV, worin R -H, R₂ -H oder R₁ sind, und R₁ für eine Gruppe der Formel -SO₃L₁ steht, wobei L₁ Na oder K bedeutet, und R₈ und R₉ Phenyl, 3- oder 4-Chlorphenyl, 3,4-Dimethoxyphenyl, 3- oder 4-Methoxyphenyl sind.

Die Diketopyrrolopyrrole der Formeln III und IV stellen bekannte Produkte dar und können beispielsweise gemäss den US 4,579,949; 4,659,775 und 4,778,899 (Formel IV) und 4,485,878 und 4,666,485 (Formel III) hergestellt werden.

Mit Ausnahme der Verbindungen der Formel I, worin R₁ für eine Gruppe der Formel -N⁺(R₁₀)(R₁₁)(R₁₂)X⁻ steht, stellen die Verbindungen der Formel I bekannte Produkte dar und können z.B. gemäss der US 4,791,204 hergestellt werden.

Dagegen sind die Verbindungen der Formel I, worin R₁ eine Gruppe der Formel -N⁺(R₁₀)(R₁₁)(R₁₂)X⁻ darstellt, sowie die Verbindungen der Formeln II und IIa, neu und stellen daher auch einen weiteren Erfindungsgegenstand dar, wobei die dort angegebenen Symbole R, R₁, R₂, R₃, p, L, X, M, n, R₁₀, R₁₁ und R₁₂ die oben angegebenen Definitionen aufweisen.

Die Verbindungen der Formel II können nach an und für sich bekannten Verfahren, z.B. durch Mono- oder Di-Kondensation einer Verbindung der Formel 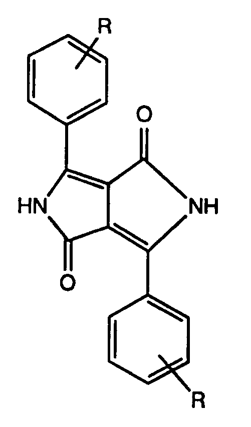
mit einer den Rest -(CH₂)ₚ-R₁ als Abgangsgruppe enthaltenden Verbindung (z.B. Chlor-essigsäureethylester) in einem geeigneten organischen Lösungsmittel, hergestellt werden.

Die Verbindungen der Formel IIa können z.B. durch Umsetzung von 2 Mol eines entsprechend substituierten Arylnitrils der Formel 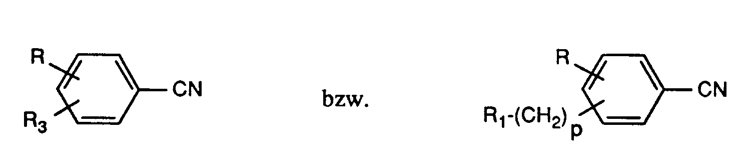
beziehungsweise eines Gemisches dieser Verbindungen mit einem Mol eines Bernsteinsäurediesters, z.B. des Dimethylesters, in analoger Weise, wie in US 4,579,949 beschrieben, hergestellt werden.

Die Verbindung der Formel I, worin R₁ eine Gruppe der Formel -N⁺(R₁₀)(R₁₁)(R₁₂)X⁻ darstellt, können z.B. durch Quaternierung einer Verbindung der Formel 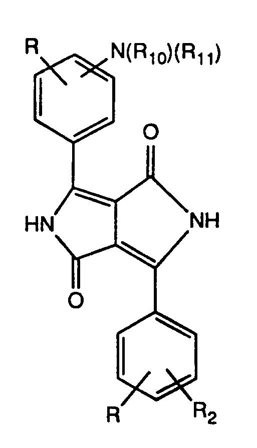
nach an und für sich bekannten Verfahren, z.B. mittels Dimethyl- oder Diethylsulfates, hergestellt werden.

Die erfindungsgemässen Stoffzusammensetzungen können z.B. durch Mischen der einzelnen Komponenten (a) und (b) im gewünschten Mengenverhältnis erhalten werden. Sie können aber einzeln oder zusammen in einem erfindungsgemäss geeigneten Lösungsmittel gelöst werden, und die erhaltene Lösung kann direkt für die gewünschte Anwendung eingesetzt werden.

Die Mengenverhältnisse der Komponente (a) und des Hilfsredoxsystems (b) können variieren. Zweckmässig werden aber molare Mengen dieser beiden Komponenten eingesetzt.

Die erfindungsgemäss verwendeten Hilfsredoxsysteme (b) stellen bekannte Verbindungen dar. Zweckmässig werden sie in reiner Form eingesetzt. Auch die Komponenten (a) der erfindungsgemässen Stoffzusammensetzungen werden zweckmässig in reiner Form eingesetzt.

Ein Beispiel für Ammonium-Eisen-II-sulfate ist (NH₃)₂Fe(SO₄)₂·6H₂O.

Erfindungsgemäss in Frage kommende Ferrocyanide sind z.B. Alkali-, Erdalkali- oder Ammoniumsalze davon, wie z.B. Natrium-, Kalium-, Calcium-, Magnesium- oder Ammonium-Ferrocyanid. Bevorzugt sind aber Kalium- oder Natriumferrocyanid.

Die Konzentration des Hilfredoxsystems (b) kann beliebig variieren; sie kann z.B. zwischen 0,001 und 0,1 M, zweckmässig aber zwischen 0,01 und 0,02 M, bezogen auf die Diketopyrrolopyrrolkomponente (a) liegen. Oft wird die Konzentration durch die Löslichkeit der erfindungsgemäss in Frage kommenden Diketopyrrolopyrrole, welche je nach chemischer Struktur eine ganz andere Löslichkeit im Applikationsmedium aufweisen, bestimmt. Aequimolare Mengen der Komponente (a) und des Redoxsystemes (b) werden bevorzugt eingesetzt.

Die Wahl des Redoxsystems (b) ist prinzipiell nicht kritisch. Zweckmässig wird aber ein Redoxsystem ausgewählt, das im Applikationsmedium löslich ist und dessen Redoxpotential demjenigen der ausgewählten Komponente (a) möglichst nahe liegt. In diesen Fällen kann das angelegte Verfahrenspotential sehr tief eingehalten werden.

Die Ferrocyanidsalze werden zweckmässig in wässrigen Systemen oder in Gemischen von Wasser mit organischen in Wasser mischbaren oder teilweise mischbaren Lösungsmitteln eingesetzt. Ferrocen dagegen wird vor allem in organischen Systemen angewendet, obwohl Kleine Mengen Wasser auch mitverwendet werden können, solange diese Verbindung gelöst bleibt.

Erfindungsgemäss in Frage kommende Leitsalze (c) sind alle in der Voltametrie üblich eingesetzten Salze, die im Applikationsmedium Anione und Katione erzeugen können, wie z.B.:
Katione: Li⁺, Na⁺, K⁺, N⁺(CₙH₂ₙ₊₁)₄, wobei n die Zahl 1,2,3 oder 4 ist;
Anione: Cl⁻, Br⁻, I⁻, ClO₄⁻, BF₄⁻, SCN⁻, CF₃SO₃⁻, H₂PO₂⁻, HPO₃²⁻, H₂PO₄⁻, HCO₃⁻;
Zweckmässig werden Alkali- oder Tetraalkylammoniumhalogenide, -fluoroborate und -perchlorate eingesetzt.

Bei der Wahl des Leitsalzes muss darauf geachtet werden, dass es sich inert verhält und lediglich die Leitfähigkeit im Applikationsmedium erhöht. Die Konzentration des Leitsalzes kann variieren, sie ist jedoch zweckmässig zwischen 3 bis 100 mal, bevorzugt zwischen 10 und 80 mal und insbesondere etwa 50 mal höher als diejenige der Pyrrolopyrrolkomponente (a).

Wie bereits oben erwähnt, eignen sich die erfindungsgemässen Stoffzusammensetzungen als elektrochrome Materialien in verschiedenen Anzeige-Systemen. Sie können hierzu direkt in Lösung in wässrigen oder organischen Systemen, oder Gemischen von Wasser mit einem organischen Lösungsmittel, verwendet werden.

Für die wässrigen Systeme wird zweckmässig möglichst reines Wasser, z.B. deionisiertes Wasser, verwendet, so dass die Konzentration des Leitsalzes bzw. der Leitsalze bei der Anwendung genau eingestellt bzw. kontrolliert werden kann und Nebenreaktionen an den Elektroden (besonders an der Gegenelektrode) vermieden werden können.

Organische Systeme sind inerte Lösungsmittel, bevorzugt mit Wasser mischbare oder teilweise mischbare Lösungsmittel, z.B. aliphatische Alkohole enthaltend 1 bis 5 C-Atome, wie Methanol, Ethanol, Propanol, Isopropanol, n-Butanol, 2-Butanol, tert.-Butanol und n-Pentanol, Ketone, wie Aceton, Methylethylketon oder Methylisobutylketon, Glykole, wie Ethylenglykol, Ethylenglykol-monomethyl- und monoethylether oder Diethylenglykol, Dioxan, Tetrahydrofuran, ferner Amide, wie Dimethylformamid, Dimethylacetamid, Pyrrolidon oder N-Methyl-2-pyrrolidon (NMP), Acetonitril, Tetramethylharnstoff, N,N'-Dimethylpropylenharnstoff (DMPU), 1,2-Dimethyl-2-imidazolidinon (DMEU), N,N,N',N'-Tetraethylsulfamid (TES), Dimethylsulfoxid, Dimethylsulfon, Tetramethylsulfon, Hexamethylphosphorsäuretriamid, Methylphosphonsäure-tetramethyldiamid, Ethylencarbonat, Ethylensulfit, N,N,N',N'-Tetramethylethylendiamin und 1,2-Dimethylethan.

Gemische der oben erwähnten Lösungsmittel mit Wasser sind auch geeignet.

Die Konzentration der Komponente (a) der erfindungsgemässen Stoffzusammensetzungen im oben erwähnten Lösungsmittel wird primär durch ihre Löslichkeit bestimmt (sie muss in Lösung sein). In der Regel liegt die Konzentration zwischen 0,001 und 0,5 Mol, insbesondere zwischen 0,01 und 0,02 Mol.

Für die wässrigen oder teilweise wässrigen Systeme werden zweckmässig Diketopyrrolopyrrole der Formeln I oder II, welche wasserlöslichmachende Gruppen enthalten, verwendet. Für die anderen Systeme werden dagegen Diketopyrrolopyrrole der Formeln III oder IV bevorzugt eingesetzt.

Wie bereits oben erwähnt, können die erfindungsgemässen Stoffzusammensetzungen als elektrochrome Materialien in verschiedenen Anzeige-Systemen verwendet werden, wobei sich die Pyrrolopyrrolkomponenten in Wechselwirkung mit ihrer reduzierten Form in Kombination mit dem eingesetzten Hilfsredoxsystem und dem Leitsalz ihr optisches Verhalten (Reflexion bzw. Transparenz) im Applikationsmedium elektrochemisch so verändern, dass eine visuelle und reversible Farbänderung erzeugt werden kann.

Verschiedene Systeme bzw. Apparaturen können hierfür angewendet werden, z.B. wie im "Displays", Oktober 1983, 221-225, oder Glastechnische Ber. 62 (1989), 38-45. Dabei wird eine sich in einer geeigneten Zelle befindende Lösung einer erfindungsgemässen Stoffzusammensetzung zwischen zwei Elektroden (die sogenannte Anzeige-Elektrode und die Gegenelektrode) einer bestimmten Gleichspannung während einer bestimmten Zeit unterworfen, so dass auf, beziehungsweise dicht an der Anzeige-Elektrode die Pyrrolopyrrolkomponente (in gelöster Form farblos bzw. leicht gelblich gefärbt) elektrolytisch reduziert wird und das so erhaltene Produkt farbig wird, wobei die so erzeugte Farbänderung der gewünschten Form an der eingesetzten Anzeige-Elektrode entspricht. Nach Umpolen der Gleichspannung verschwindet die so erzeugte Farbänderung, und das Verfahren kann beliebig wiederholt werden.

Geeignete Anzeige-Elektroden sind transparente bzw. durchsichtige Elektroden z.B. aus Indiumoxid (In₂O₃), Indiumzinnoxiden, Zinkoxid, Titandioxid, Antimonzinnoxid (NESA), Arsenzinnoxid, Kupferjodid, Cadmiumzinnoxid (Cd₂SnO₄) und insbesondere Indium- und Zinn-Mischoxide (die sogenannten ITO-Eletroden).Derartige Elektroden liegen zweckmässig als Ueberzug auf einem Glasträger. Als weitere geeignete Elektroden können auch sehr dünne Metallfilme verwendet werden.

Geeignete Gegeneletroden, wo eine entsprechende elektrochemische Reaktion stattfindet, sind zweckmässig auch transparente Elektroden der oben genannten Zusammensetzung. Es können aber auch andere Elektroden, z.B. farbige Elektroden, verwendet werden. In diesem Fall muss zur Abschirmung der Eigenfarbe dieser Elektrode eine für die erfindungsgemässen in Frage kommenden Ionen durchlässige Membran in der anmeldungsgemässen Lösung zwischen den beiden Elektroden eingebaut werden, so dass Lichtreflexion aus der farbigen Gegeneletrode auf die Anzeige-Elektrode ausgeschlossen werden kann.

Zweckmässig werden niedrige Gleichspannungen zwischen den beiden Elektroden angelegt, z.B. Gleichspannungen zwischen 0,1 und 10 V, bevorzugt zwischen 0,2 und 5 V, ganz bevorzugt zwischen 0,5 und 2,0 V.

Die Form der Anzeigen, insbesondere für Ziffern, kann z.B. mit Hilfe einer 7-Segmenteinrichtung durch geeignete kontrollierte Schaltung der Elektroden entsprechend der Form der gewünschten Ziffern gesteuert bzw. gebildet werden.

Ein erfindungsgemäss bevorzugtes System enthält ein Diketopyrrolopyrrol der Formel IV in Kombination mit Ferrocen als Hilfsredoxsystem in einer Dimethylsulfoxidlösung und mit einer ITO-Anzeige-Elektrode, wobei in der Formel IV R₈ und R₉ Phenyl bedeuten.

Es kann besonders für wässrige Systeme vorteilhaft sein, wasserlösliche poröse Polymere, wie z.B. Agar, Gallert, Methylcellulose, Polyvinylalkohol oder Polyvinylpyrrolidone, in Konzentration von z.B. 0,1 bis 10 Gew.%, bezogen auf die Lösungsmittel- bzw. Wassermenge, zu verwenden. Das Polymer wird zweckmässig zugesetzt, um die elektrochemisch geänderte farbige Komponente (a) an der bzw. in der Nähe der Anzeige-Elektrode festzuhalten. Damit kann vermieden werden, dass sich die farbige Komponente (a) von der Elektrode nicht zu weit entfernt und dadurch nicht zu diffusen bzw. weniger scharfen Bildern führt.

Mit den erfindungsgemässen Stoffzusammensetzungen können verschiedene farbige Anzeigen erhalten werden, z.B. von orange über rote bis violette Anzeigefarben auf einem farblosen Untergrund.

Die erfindungsgemässen Stoffzusammensetzungen können in verschiedenen Anzeige-Systemen verwendet werden, z.B. zur Erzeugung von Buchstaben, Ziffern und Bildern in Uhren, Anzeigeschildern und -instrumenten, ferner in X-Y-Matrixanzeigen für Bildschirme z.B. für Fernsehapparate basierend auf eletrochromen Anzeigen.Ferner können die erfindungsgemässen Systeme auch für Smart-Windows (funktionsveränderliche Fenster) angewendet werden. Die erhaltenen Anzeigen sind mehrfarbig, unabhängig vom Beobachtungswinkel gut lesbar und haben eine guten Kontrast. Der damit verbundene Speichereffekt kann anwendungsgemäss auch benützt werden. Ausserdem können verschiedenartige Anzeigen durch Einsatz von kleinen Gleichspannungen erzeugt werden.

Die nachfolgenden Beispiele erläutern die Erfindung.

Beispiel 1: Eine 1 mM DMSO-Lösung einer Verbindung der Formel IV, worin R₈ und R₉ Phenyl darstellen, 1 mM Ferrocen und 50 mM Tetrabutylammoniumperchlorat wird in eine Zelle enthaltend zwei ITO-Elektroden, wie in Japanese Journal of Applied Physics 26, S. 1357, Fig. 2, beschrieben, eingefüllt. Ein kariertes, rotes Bildmuster von 1,0 cm²- Grösse wird an der Anzeige-Elektrode durch Anlegung einer Gleichspannung von 2 V während einer Sekunde erzeugt. Dabei wird ein Kontrastverhältnis von 10 bei 585 nm erreicht, wobei diese Zahl das Verhältnis der Transmission der Grundlösung (bei λ 585) zur Transmission der gefärbten Anzeige-Elektrode bei der gleichen Wellenlänge angibt. Mit diesem System können bis 10⁵ Zyklen Beschriftung/Auslöschen erhalten werden. (DMSO=Dimethylsulfoxid).

Beispiel 2: Das Beispiel 1 wird wiederholt, wobei aber anstelle von Ferrocen eine gleiche Menge Natriumferrocyanid (1 mM) und zudem 10 Gew.% deionisiertes Wasser in der DMSO-Lösung verwendet werden, und anstelle von 2 V eine Gleichspannung von 1,0 V angelegt wird. Das gleiche Kontrastverhältnis wie oben wird erhalten, und bis 10⁴ Zyklen werden erreicht.

Beispiel 3: Eine 0,25 mM NMP-Lösung einer Verbindung der Formel IV, worin R₈ und R₉ meta-Chlorphenyl bedeuten, 2 mM Ferrocen und 100 mM Natriumperchlorat wird in die gleiche Zelle wie Beispiel 1 eingefüllt. Durch Anlegung einer Gleichspannung von 2,0 V während einer Sekunde wird eine rote Anzeige erzeugt, und 10⁴ Zyklen Beschriftung/Auslöschen (jeweils eine Sekunde zwischen jeder Beschriftung und jedem Auslöschen) werden erhalten. Kontrastverhältnis bei 580 nm: 4;
(NMP=N-Methyl-2-pyrrolidon).

Beispiel 4: Das Beispiel 1 wird wiederholt, mit dem Unterschied jedoch, dass anstelle der dort angegebenen Verbindung der Formel IV 10 mM einer Pyrrolopyrrolverbindung gleicher Formel, worin R₈ und R₉ para-tert.-Butyl bedeuten, 5 mM Ferrocen (anstatt 1 mM) und 150 mM Tettabutylammoniumperchlorat (statt 50 mM) verwendet werden. Dieses elektrochrome System ergibt ein Kontrastverhältnis von 20 und eine Zyklus-Lebensdauer von 10⁵.

Beispiel 5: 30 mM einer Verbindung der Formel IV, worin R₈ und R₉ 3,4-Dimethoxyphenyl bedeuten, 15 mM Kaliumferrocyanid und 200 mM Natriumperchlorat werden in einem Gemisch von 90 Gew.% Dioxan und 10 Gew.% Wasser gelöst und gemäss Beispiel 1 weiterbehandelt, wobei eine Gleichspannung von 1,1 V während einer Sekunde abwechselnd angelegt wird (die Zeitdauer ohne Spannung beträgt auch eine Sekunde). Dieses System ergibt ein Kontrastverhältnis von 33 und eine Zyklus-Lebensdauer von 10⁵.

Beispiel 6: Verfährt man wie im obigen Beispiel 5, verwendet aber anstelle des dort angegebenen Pyrrolopyrrols 30 mM einer Verbindung der Formel IV, worin R₈ und R₉ para-Isopropylphenyl bedeuten, so werden gleich gute Anzeigen erhalten.

Beispiel 7: Eine 0,02 M wässrige Lösung einer Verbindung der Formel I, worin R -H, und R₁ und R₂ para-SO₃Na sind, 0,02 M Natriumferrocyanid und 0,5 M Kaliumchlorid wird mit einer Gleichspannung von 1,5 V gemäss Beispiel 1 behandelt (Beschriftungsdauer: 1 Sek., Auslöschungszeit: 1 Sek.). Ein Kontrastverhältnis von 28 bei 560 nm und eine Zyklus-Lebensdauer von mehr als 10⁴ werden erhalten.

Beispiel 8: Verfährt man wie im obigen Beispiel 7, verwendet aber anstelle des dort angegebenen Pyrrolopyrrols eine Verbindung der Formel I, worin R -H, und R₁ und R₂ para-COONa bedeuten, so werden ein Kontrastverhältnis von 8 bei 560 nm und eine Zyklus-Lebensdauer von 10³ erhalten.

Beispiel 9: Verfährt man nach obigem Beispiel 7, verwendet aber noch zusätzlich 5 Gew.% Gallert bei 1,6 V (statt 1,5 V), so werden ein Kontrastverhältnis von 20 und eine Zyklus-Lebensdauer von mehr als 10³ erhalten.

Beispiel 10: Eine wässrige Lösung enthaltend 0,01 M der Pyrrolopyrrolverbindung gemäss Beispiel 7,6 Gew.% Polyvinylalkohol, 0,01 M Kaliumferrocyanid und 0,2 M Tetrabutylammoniumperchlorat wird bei 1,8 V gleich wie Beispiel 1 behandelt (1 Sek. Beschriftungszeit, 1 Sek. Auslöschungszeit).
Erhaltenes Kontrastverhältnis: 15; Zyklus-Lebensdauer: mehr als 10³.

## Patentansprüche

1. Elektrochrome Stoffzusammensetzungen enthaltend
(a) mindestens ein 1,4-Diketopyrrolo-[3,4-c]-pyrrol der Formeln I, II, IIa, III oder IV 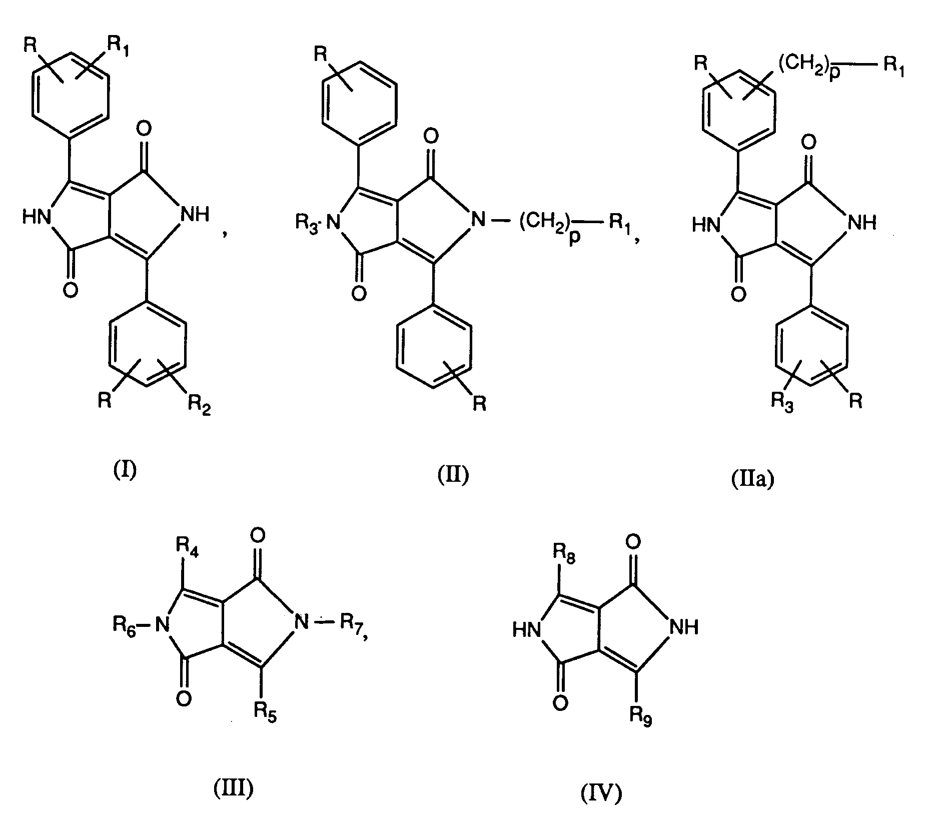 und
(b) ein Hilfsredoxsystem aus der Ferrocyanid-, Ferrocen- oder Ammonium-Eisen(II)-sulfat-Reihe in Kombination mit mindestens einem Leitsalz (c), wobei in den Formeln I, II und IIa
die beiden Gruppen R unabhängig voneinander -H, Halogen, C₁-C₄-Alkyl, C₁-C₄-Alkoxy, C₁-C₄-Mercaptoalkyl, -CN, -CF₃ oder Phenyl, R₂ -H oder R₁, und R₃ -H oder eine Gruppe der Formel -(CH₂)ₚ-R₁ bedeuten, p für eine ganze Zahl von 1 bis 6 und R₁ für eine Gruppe der Formel -CO₂L, -SO₃L, -PO₃L oder -N⁺(R₁₀)(R₁₁)(R₁₂)X⁻ stehen, worin X ein Halogenion (SO₄)²⁻,(SO₃OCH₃)⁻ oder (SO₃OC₂H₅)⁻ und L -H, eine Gruppe der Formel 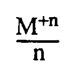 oder ⁺NH(R₁₀)(R₁₁)(R₁₂) darstellen, wobei M ein ein-, zwei- oder dreiwertiges Metallkation, n die Zahl 1, 2 oder 3, und R₁₀, R₁₁ und R₁₂ unabhängig voneinander -H, C₁-C₁₈-Alkyl, C₇-C₁₂-Phenylalkyl, C₅-C₆-Cycloalkyl oder unsubstituiertes oder durch Halogen, C₁-C₄-Alkyl oder C₁-C₄-Alkoxy substituiertes Phenyl oder Naphthyl bedeuten, oder R₁₀ und R₁₁ zusammen mit dem N-Atom einen 5-6-gliedrigen heterocyclischen Rest bilden, oder R₁₀, R₁₁ und R₁₂ zusammen mit dem N-Atom einen 5-6-gliedrigen aromatischen heterocyclischen Rest darstellen, in der Formel III
R₄ und R₅ unabhängig voneinander unsubstituiertes oder durch Halogen, C₁-C₄-Alkyl oder C₁-C₄-Alkoxy substituiertes Naphthyl, Phenyl oder Pyridyl bedeuten, das wiederum durch ein oder zwei Halogenatome, eine oder zwei C₁-C₄-Alkyl- oder C₁-C₄-Alkoxygruppen, ferner durch C₁-C₄-Alkylmercapto, -CN, CF₃, -CCl₃, -CONH₂, C₂-C₅-Alkoxycarbonyl oder unsubstituiertes oder durch Halogen, -CH₃ oder -OCH₃ substituiertes Phenyl, Phenoxy, Thiophenoxy und N-Phenylcarbamoyl substituiert sein kann, und R₆ und R₇ unabhängig voneinander C₁-C₁₂-Alkyl, C₁-C₁₂-Alkoxy, C₁-C₁₂-Alkylmercapto, C₁-C₁₂-Alkyl-C₂-C₅-alkoxycarbonyl, C₁-C₁₂-Alkyl-C₁-C₄-N-alkylcarbamoyl oder unsubstituiertes oder durch Halogen, C₁-C₄-Alkyl, C₁-C₄-Alkoxy, C₁-C₄-Alkylmercapto, -CN oder -CF₃ substituiertes Phenyl, Benzyl oder Benzoyl bedeuten, und in der Formel IV
R₈ und R₉ unabhängig voneinander C₁-C₈-Alkyl, C₃-C₆-Cycloalkyl, C₇-C₁₂-Phenylalkyl, das im Phenylrest durch Halogen, C₁-C₄-Alkyl, C₁-C₄-Alkoxy, C₁-C₄-Alkylmercapto, -CN, -CF₃, -CH₃, -CONH₂ oder Phenyl substituiert sein kann, ferner R₈ und R₉ unsubstituiertes oder durch Halogen, C₁-C₄-Alkyl oder C₁-C₄-Alkoxy substituiertes Naphthyl oder unsubstituiertes oder durch Halogen, C₁-C₄-Alkyl, C₁-C₄-Alkoxy, C₁-C₄-Alkylmercapto, -CN, -CF₃, -CCl₃, -CONH₂ oder Phenyl substituiertes Phenyl, oder Pyridyl sind.

2. Stoffzusammensetzungen enthaltend ein Diketopyrrolopyrrol der Formeln I, II, IIa, III oder IV gemäss Anspruch 1, worin in den Formeln I, II und IIa die beiden Gruppen R unabhängig voneinander -H, -Cl, -CH₃ oder -OCH₃, R₂ -H oder R₁, und R₃ -H oder eine Gruppe der Formel -(CH₂)ₚ-R₁ bedeuten, p für eine ganze Zahl von 1 bis 6 und R₁ für eine Gruppe der Formeln -CO₂L₁ oder -SO₃L₁ stehen, wobei L₁ -H, Na oder K ist, in der Formel III R₄ und R₅ unabhängig voneinander unsubstituiertes oder durch ein oder zwei Chloratome, eine oder zwei C₁-C₄-Alkyl- oder C₁-C₄-Alkoxygruppen, Methylmercapto, -CN, Phenyl oder durch Phenoxy oder Thiophenoxy substituiertes Phenyl bedeuten, und in der Formel IV R₈ und R₉ 4-Pryridyl, unsubstituiertes oder durch -Cl, -Br, eine oder zwei CH₃- oder OCH₃-Gruppen substituiertes Phenyl bedeuten.

3. Stoffzusammensetzungen enthaltend ein Diketopyrrolopyrrol der Formeln I oder IV, worin R -H, R₂ -H oder R₁ sind, und R₁ für eine Gruppe der Formel -SO₃L₁ steht, wobei L₁ -Na oder K bedeutet, und R₈ und R₉ Phenyl, 3-oder 4-Chlorphenyl, 3,4-Dimethoxyphenyl, 3- oder 4-Methoxyphenyl sind.

4. Stoffzusammensetzungen gemäss Anspruch 1 enthaltend als Hilfsredoxsystem (b) Kalium- oder Natriumferrocyanid.

5. Stoffzusammensetzungen gemäss Anspruch 1 enthaltend aequimolare Mengen der Komponenten (a) und des Redoxsystems (b).

6. Stoffzusammensetzungen gemäss Anspruch 1 enthaltend als Leitsalz (c), ein Alkali- oder Tetraalkylammoniumhalogenid, -fluoroborat oder -perchlorat.

7. Verwendung der Stoffzusammensetzungen gemäss Anspruch 1 als elektrochrome Materialien in elektrochromen Anzeige-Systemen.

8. Verfahren zur Erzeugung von elektrochromen Anzeigen in einem wässrigen oder einem organischen System, oder in einem Gemisch von Wasser mit einem organischen Lösungsmittel, wonach man eine Stoffzusammensetzung gemäss Anspruch 1 zwischen zwei Elektroden (Anzeige-Elektrode und Gegenelektrode) verwendet.

9. Verfahren gemäss Anspruch 8, wonach man als organische Systeme inerte mit Wasser mischbare oder teilweise mischbare Lösungsmittel verwendet.

10. Verfahren gemäss Anspruch 8, wonach man an die Elektroden Gleichspannungen zwischen 0,1 und 10 V einsetzt.

11. Verfahren gemäss Anspruch 8, wonach man transparente bzw. durchsichtige Elektroden verwendet.

12. Verfahren gemäss Anspruch 8, wonach man sogenannte ITO-Elektroden verwendet.

13. Verfahren gemäss Anspruch 8, wonach ein wässriges System enthaltend zusätzlich noch ein wasserlösliches poröses Polymer verwendet wird.

14. Verbindungen der Formel I gemäss Anspruch 1, worin R₁ eine Gruppe der Formel -N⁺(R₁₀)(R₁₁)(R₁₂)X⁻ darstellt, und R, R₂, R₁₀, R₁₁, R₁₂ und X die im Anspruch 1 angegebene Bedeutung haben.

15. Verbindungen der Formel II oder IIa gemäss Anspruch 1, worin R, R₁, R₃ und p die im Anspruch 1 angegebene Bedeutung haben.

## Claims

1. An electrochromic composition containing
(a) at least one 1,4-diketopyrrolo[3,4-c]pyrrole of the formula I, II, IIa, III or IV 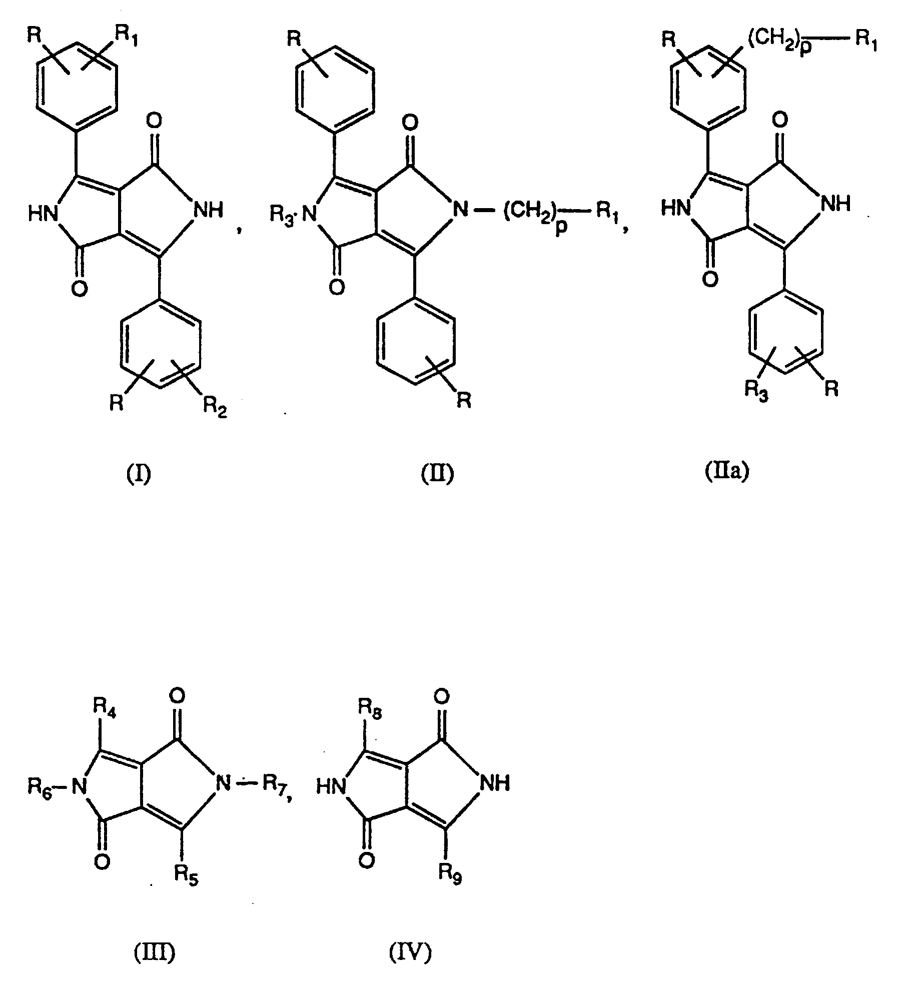 and
(b) an auxiliary redox system from the ferrocyanide, ferrocene or ammonium iron(II) sulfate series in combination with at least one conductive salt (c), where, in the formulae I, II and IIa,
the two groups R, independently of one another, are -H, halogen, C₁-C₄alkyl, C₁-C₄alkoxy, C₁-C₄mercaptoalkyl, -CN, -CF₃ or phenyl, R₂ is -H or R₁, and R₃ is -H or a group of the formula -(CH₂)ₚ-R₁, p is an integer from 1 to 6, and R₁ is a group of the formula -CO₂L, -SO₃L, -PO₃L or -N⁺(R₁₀)(R₁₁)(R₁₂)X⁻ in which X is a halogen ion, (SO₄)²⁻, (SO₃OCH₃)⁻ or (SO₃OC₂H₅)⁻ and L is -H, a group of the formula 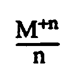 or ⁺NH(R₁₀)(R₁₁)(R₁₂) where M is a monovalent, divalent or trivalent metal cation, n is the number 1, 2 or 3 and R₁₀, R₁₁ and R₁₂, independently of one another, are -H, C₁-C₁₈alkyl, C₇-C₁₂phenylalkyl, C₅-C₆cycloalkyl, or phenyl or naphthyl which is unsubstituted or substituted by halogen, C₁-C₄alkyl or C₁-C₄alkoxy, or R₁₀ and R₁₁, together with the nitrogen atom, form a 5-6-membered heterocyclic radical, or R₁₀, R₁₁ and R₁₂, together with the nitrogen atom, form a 5-6-membered aromatic heterocyclic radical, in the formula III,
R₄ and R₅, independently of one another, are unsubstituted or halogen-, C₁-C₄alkyl- or C₁-C₄alkoxy-substituted naphthyl, phenyl or pyridyl, which in turn can be substituted by one or two halogen atoms, one or two C₁-C₄alkyl or C₁-C₄alkoxy groups, furthermore by C₁-C₄alkylmercapto, -CN, CF₃, -CCl₃, -CONH₂, C₂-C₅alkoxycarbonyl or unsubstituted or halogen-, CH₃- or OCH₃-substituted phenyl, phenoxy, thiophenoxy or N-phenylcarbamoyl, and R₆ and R₇, independently of one another are C₁-C₁₂alkyl, C₁-C₁₂alkoxy, C₁-C₁₂alkylmercapto, C₁-C₁₂alkyl-C₂-C₅alkoxycarbonyl, C₁-C₁₂alkyl-C₁-C₄-N-alkylcarbamoyl or unsubstituted or halogen-, C₁-C₄alkyl-, C₁-C₄alkoxy-, C₁-C₄alkylmercapto-, CN- or CF₃-substituted phenyl, benzyl or benzoyl, and in the formula IV,
R₈ and R₉, independently of one another, are C₁-C₈alkyl, C₃-C₆cycloalkyl, C₇-C₁₂phenylalkyl, which may be substituted in the phenyl radical by halogen, C₁-C₄alkyl, C₁-C₄alkoxy, C₁-C₄alkylmercapto, -CN, -CF₃, -CH₃, - CONH₂ or phenyl, or R₈ and R₉ are furthermore unsubstituted or halogen-, C₁-C₄alkyl- or C₁-C₄alkoxy-substituted naphthyl or unsubstituted or halogen-, C₁-C₄alkyl-, C₁-C₄alkoxy-, C₁-C₄alkylmercapto-, -CN, -CF₃, -CCl₃, -CONH₂ or phenyl-substituted phenyl, or are pyridyl.

2. A composition according to claim 1, containing a diketopyrrolopyrrole of the formula I, II, IIa, III or IV in which, in the formulae I, II and IIa, the two groups R, independently of one another, are -H, -Cl, -CH₃ or -OCH₃, R₂ is -H or R₁, and R₃ is -H or a group of the formula -(CH₂)ₚ-R₁, p is an integer from 1 to 6, and R₁ is a group of the formula -CO₂L₁ or -SO₃L₁ where L₁ is -H, Na or K, in the formula III, R₄ and R₅, independently of one another, are phenyl which is unsubstituted or substituted by one or two chlorine atoms, one or two C₁-C₄alkyl or C₁-C₄alkoxy groups, methylmercapto, -CN, phenyl, phenoxy or thiophenoxy, and, in the formula IV, R₈ and R₉ are 4-pyridyl, or phenyl which is unsubstituted or substituted by -Cl, -Br or by one or two CH₃ or OCH₃ groups.

3. A composition containing a diketopyrrolopyrrole of the formula I or IV in which R is -H, R₂ is -H or R₁, and R₁ is a group of the formula -SO₃L₁ where L₁ is Na or K, and R₈ and R₉ are phenyl, 3- or 4-chlorophenyl, 3,4-dimethoxyphenyl or 3- or 4-methoxyphenyl.

4. A composition according to claim 1, containing, as auxiliary redox system (b), potassium ferrocyanide or sodium ferrocyanide.

5. A composition according to claim 1, containing equimolar amounts of component (a) and the redox system (b).

6. A composition according to claim 1, containing, as conductive salt (c), an alkali metal halide, fluoroborate or perchlorate or a tetraalkylammoniuin halide, fluoroborate or perchlorate.

7. Use of a composition according to claim 1 as an electrochromic material in an electrochromic display system.

8. A process for producing an electrochromic display in an aqueous or organic system, or in a mixture of water and an organic solvent, in which a composition according to claim 1 is used between two electrodes (display electrode and counterelectrode).

9. A process according to claim 8, in which the organic system used is an inert water-miscible or partially miscible solvent.

10. A process according to claim 8, in which a direct voltage of between 0.1 and 10 V is applied to the electrodes.

11. A process according to claim 8, in which transparent or nonopaque electrodes are used.

12. A process according to claim 8, in which so-called ITO electrodes are used.

13. A process according to claim 8, in which an aqueous sustem additionally containing a water-soluble porous polymer is used.

14. A compound of the formula I according to claim 1, in which R₁ is a group of the formula -N⁺(R₁₀)(R₁₁)(R₁₂)X⁻, and R, R₂, R₁₀, R₁₁, R₁₂ and X are as defined in claim 1.

15. A compound of the formula II or IIa according to claim 1, in which R, R₁, R₃ and p are as defined in claim 1.

## Revendications

1. Compositions de matières contenant
(a) au moins un 1,4-dicétopyrrolo-[3,4-c]-pyrrole de formules I, II, IIa, III ou IV 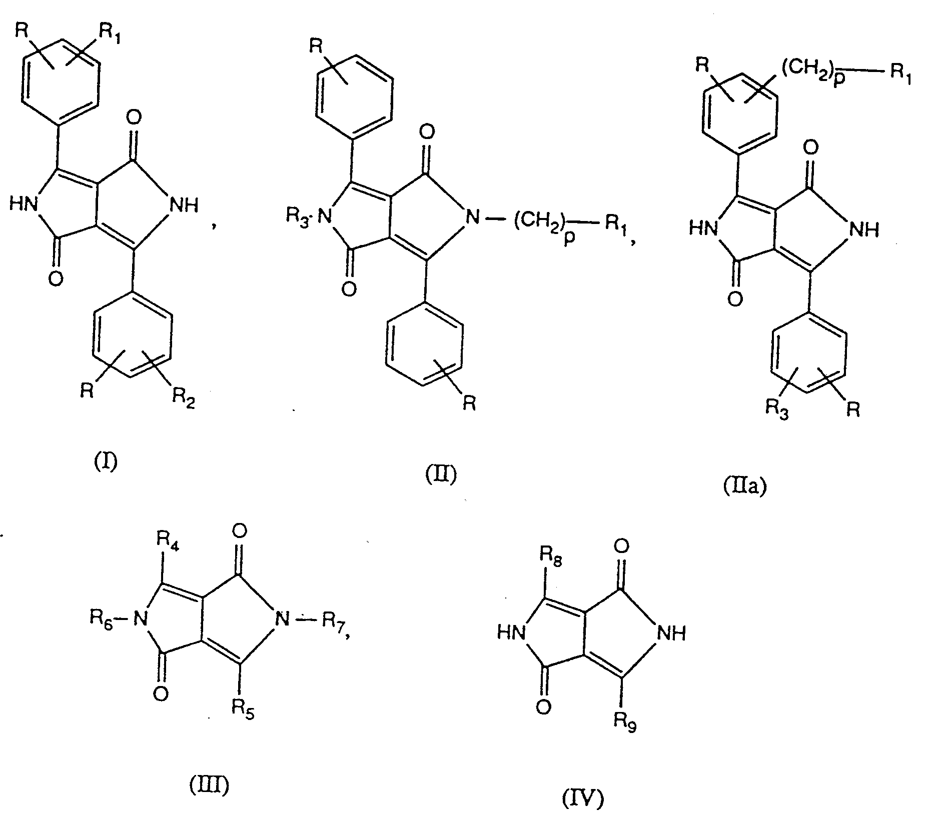 et
(b) un système redox auxiliaire de la série de ferrocyanure, de ferrocène ou de sulfate d'ammoniumfer(II), en combinaison avec au moins un sel conducteur (c), dans les formules I, II et IIa
les deux groupes R, indépendamment l'un de l'autre, signifiant -H, les halogène, alkyle en C₁-C₄, alcoxy en C₁-C₄, mercapto(alkyl en C₁-C₄), -CN, -CF₃ ou phényle, R₂ signifiant -H ou R₁, et R₃ signifiant -H ou un groupe de formule -(CH₂)ₚ-R₁, P représente un nombre entier de 1 à 6 et R₁ représente un groupe de formule -CO₂L, -SO₃L, -PO₃L ou -N⁺(R₁₀)(R₁₁)(R₁₂)X⁻, où X représente un ion halogène, (SO₄)²⁻, (SO₃OCH₃)⁻ ou (SO₃OC₂H₅)⁻ et L représente -H, un groupe de formule 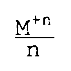 ou ⁺NH(R₁₀)(R₁₁)(R₁₂), M signifiant un cation de métal mono-, bi- ou trivalent, n les nombres 1, 2 ou 3, et R₁₀, R₁₁ et R₁₂, indépendamment l'un de l'autre, signifient -H, les alkyle en C₁-C₁₈, phénylalkyle en C₇-C₁₂, cycloalkyle en C₅-C₆ ou naphtyle ou phényle non substitué ou substitué par les halogéne, alkyle en C₁-C₄ ou alcoxy en C₁-C₄, ou R₁₀ et R₁₁, ensemble avec l'atome de N, forment un radical hétérocyclique à 5 à 6 chaînons, ou R₁₀, R₁₁ et R₁₂, ensemble avec l'atome de N, forment un radical hétérocyclique aromatique à 5 à 6 chaînons, dans la formule III,
R₄ et R₅, indépendamment l'un de l'autre, signifient les pyridyle, phényle ou naphtyle non substitué ou substitué par des halogène, alkyle en C₁-C₄ ou alcoxy en C₁-C₄, lesquels phényle, naphtyle ou pyridyle peuvent, de nouveau, être substitué par un ou deux atomes d'halogène, un ou deux groupes alkyle en C₁-C₄ ou alcoxy en C₁-C₄, de plus par (alkyl en C₁-C₄₎-mercapto, -CN, CF₃, -CCl₃, -CONH₂, (alcoxy en C₂-C₅) carbonyle ou les N-phénylcarbamoyle, thiophénoxy, phénoxy ou phényle non substitués ou substitués par halogène, -CH₃ ou -OCH₃, et R₆ et R₇, indépendamment l'un de l'autre, représentent les alkyle en C₁-C₁₂, alcoxy en C₁-C₁₂, (alkyl en C₁-C₁₂)-mercapto, (alkyl en C₁-C₁₂)-(alcoxy en C₂-C₅)-carbonyle, (alkyl en C₁-C₁₂)-N-(alkyl en C₁-C₄)-carbamoyle ou benzoyle, benzyle ou phényle non substitué ou substitué par halogène, alkyle en C₁-C₄, alcoxy en C₁-C₄, (alkyl en C₁-C₄)-mercapto, -CN ou CF₃, et dans la formule IV,
R₈ et R₉, indépendamment l'un de l'autre, représentent les alkyle en C₁-C₈, cycloalkyle en C₃-C₆, phénylalkyle en C₇-C₁₂, qui peut être substitué dans le radical phényle par les halogène, alkyle en C₁-C₄, alcoxy en C₁-C₄, (alkyl en C₁-C₄)-mercapto, -CN, -CF₃, -CH₃, -CONH₂ ou phényle, de plus R₈ et R₉ représentent un naphtyle non substitué ou substitué par les halogène, alkyle en C₁-C₄ ou alcoxy en C₁-C₄ ou phényle substitué par les halogène, alkyle en C₁-C₄, alcoxy en C₁-C₄, (alkyl en C₁-C₄)-mercapto, -CN, -CF₃, -CCl₃, -CONH₂ ou phényle, ou représentent le pyridyle.

2. Compositions de matières contenant un dicétopyrrolopyrrole de formules I, II, IIa, III ou IV selon la revendication 1, où dans les formules I, II et IIa, les deux groupes R, indépendamment l'un de l'autre, signifient -H, -Cl, -CH₃ ou -OCH₃, R₂ signifie -H ou R₁, et R₃ représente -H ou un groupe de formule -(CH₂)ₚ-R₁, p représente un nombre entier de 1 à 6, et R₁ représente un groupe de formules -CO₂L₁ ou -SO₃L₁, L₁ représentant -H, Na ou K, dans la formule III R₄ et R₅, indépendamment l'un de l'autre, signifient un phényle non substitué ou substitué par un ou deux atomes de chlore, un ou deux groupes alkyle en C₁-C₄ ou alcoxy en C₁-C₄, méthylmercapto, -CN, phényle ou phényle substitué par phénoxy ou thiophénoxy, et dans la formule IV R₈ et R₉ représente les 4-pyridyle, phényle non substitué ou substitué par -Cl, -Br, un ou deux groupes CH₃- ou OCH₃.

3. Compositions de matières contenant un dicétopyrrolopyrrole de formules I ou IV, où R représente -H, R₂ représente -H ou R₁, et R₁ représente un groupe de formule -SO₃L₁, L₁ signifiant Na ou K, et R₈ et R₉ représentent les phényle, 3- ou 4-chlorophényle, 3,4-diméthoxyphényle, 3- ou 4-méthoxyphényle.

4. Compositions de matières selon la revendication 1, contenant en tant que système redox auxiliaire (b), les ferrocyanures de potassium ou de sodium.

5. Compositions de matières selon la revendication 1, contenant des quantités équimolaires du composant (a) et du système redox (b).

6. Compositions de matières selon la revendication 1, contenant en tant que sel conducteur (c) un perchlorate, fluoroborate ou halogénure alcalin ou de tétraalkylammonium.

7. Utilisation des compositions de matières selon la revendication 1, en tant que matières électrochromes dans les systèmes d'affichage électrochromes.

8. Procédé pour la production d'affiches électrochromes dans un système aqueux ou organique ou dans un mélange d'eau avec un solvant organique, selon lequel on utilise une composition de matières selon la revendication 1, entre deux électrodes (électrode d'affichage et plaque signal).

9. Procédé selon la revendication 8, selon laquelle on utilise en tant que systèmes organiques des solvants inertes miscibles ou partiellement miscibles à l'eau.

10. Procédé selon la revendication 8, selon laquelle on applique aux électrodes des tensions continues comprises entre 0,1 et 10 volts.

11. Procédé selon la revendication 8, selon laquelle on utilise des électrodes transparentes, respectivement translucides.

12. Procédé selon la revendication 8, selon laquelle on utilise des électrodes appelées ITO.

13. Procédé selon la revendication 8, selon laquelle on utilise un système aqueux contenant, de plus, encore un polymère poreux hydrosoluble.

14. Composés de formule I selon la revendication 1, où R₁ représente un groupe de formule -N⁺(R₁₀)(R₁₁)(R₁₂)X⁻, et R, R₂, R₁₀, R₁₁, R₁₂ et X ont la signification donnée dans la revendication 1.

15. Composés de formules II ou IIa selon la revendication 1, où R, R₁, R₃ et p ont la signification donnée dans la revendication 1.
